Europäisches Patentamt

European Patent Office

Office européen des brevets

(19)

(11) EP 0 576 655 B1

(12) FASCICULE DE BREVET EUROPEEN

(45) Date de publication et mention
de la délivrance du brevet:
**31.01.1996 Bulletin 1996/05**

(21) Numéro de dépôt: **93902375.0**

(22) Date de dépôt: **23.12.1992**

(51) Int Cl.[6]: **G01C 19/72**

(86) Numéro de dépôt international:
**PCT/FR92/01233**

(87) Numéro de publication internationale:
**WO 93/13387 (08.07.1993 Gazette 1993/16)**

(54) **GYROMETRE A FIBRE OPTIQUE A TRAITEMENT NUMERIQUE DU SIGNAL**

OPTISCHER FASERKREISEL ZUM DIGITALEN VERARBEITEN EINES SIGNALS

OPTICAL FIBER GYROMETER WITH DIGITAL PROCESSING OF THE SIGNAL

(84) Etats contractants désignés:
**BE CH DE ES GB IT LI SE**

(30) Priorité: **23.12.1991 FR 9116003**

(43) Date de publication de la demande:
**05.01.1994 Bulletin 1994/01**

(73) Titulaire: **SAGEM SA**
**F-75783 Paris Cédex 16 (FR)**

(72) Inventeurs:
• **ROCHEREAU, Jacques**
**F-95100 Argenteuil (FR)**

• **PEPIN, Jean-François**
**F-95100 Argenteuil (FR)**

(74) Mandataire: **Fort, Jacques**
**F-75009 Paris (FR)**

(56) Documents cités:
**EP-A- 0 020 216      EP-A- 0 427 110**
**EP-A- 0 455 530**

• **SPIE Vol.719 Fiber Optic Gyros: 10th**
**anniversary Conference Proceedings 1986,**
**H.C.Lefèvre et al:"Integrated Optics: A**
**practical solution for the fiber-optic**
**gyroscope", pages 101-112, pages 103-104,**
**paragraph "Closed loop operation"**

## Description

L'invention concerne les gyromètres dits à fibre optique, du type comportant : un guide diélectrique d'ondes en bobine ; une source électromagnétique munie d'un séparateur pour envoyer dans la bobine deux ondes contrarotatives provenant de la source ; un détecteur d'interférence recevant les ondes contrarotatives ; des moyens électro-optiques de déphasage, d'une part commandés pour donner aux ondes une modulation périodique alternative et symétrique de phase, à une 1/2 période $\tau_n$ sensiblement égale au temps $\tau_f$ de parcours de la bobine, placés en amont de la bobine pour une onde et en aval pour l'autre, d'autre part recevant une rampe de déphasage de pente réglable, placés en amont de l'anneau pour une onde et en aval pour l'autre ; et des moyens électroniques de bouclage et de mesure commandant le sens et la valeur de la pente de la rampe pour annuler le déphasage des ondes reçues par le détecteur d'interférence.

Les moyens électro-optiques peuvent comporter deux déphaseurs distincts, recevant l'un un signal de modulation, l'autre la rampe de déphasage. Ils peuvent également comporter un seul déphaseur, recevant un signal combiné.

Il existe de très nombreux documents décrivant des gyromètres du type ci-dessus défini, dont le guide diélectrique est généralement une fibre optique constituant une bobine de quelques centaines de spires. Ces gyromètres sont basés sur l'effet Sagnac : lorsque deux ondes provenant de la même source sont injectées dans une bobine de fibre et contrarotatives, puis sont combinées au niveau d'un détecteur, les chemins optiques sont égaux lorsque le gyromètre est fixe. La puissance reçue par le détecteur est alors maximum. Si en revanche la bobine tourne à vitesse $\Omega$ autour de son axe, les ondes parcourent deux chemins optiques différents, ce qui se traduit par un déphasage $\phi_s$ :

$$\phi_s = (4\Pi \, LR) \, \Omega \, / \, \lambda_0 \, c_0$$

où L est la longueur totale de la fibre, R le rayon de la bobine, $\lambda_0$ la longueur d'onde dans le vide et $c_0$ la vitesse de la lumière dans le vide.

La puissance instantanée P reçue par le détecteur est alors

$$P = P_0/2 \, (1 + \cos \phi_s)$$

où $P_0$ est la puissance reçue en l'absence de rotation.

Un gyromètre réalisé de façon à fournir $\Omega$ par simple mesure de $P/P_0$ serait dans la pratique inutilisable. Les gyromètres du type ci-dessus défini permettent d'écarter deux défauts importants du montage de principe.

Un premier défaut est dû à ce que $P/P_0$ varie de façon faible et non linéaire, puisque $\cos \phi_s$ varie peu, lorsque $\phi_s$ est proche de zéro. Les moyens électro-optiques du gyromètre mentionné ci-dessus amènent le point de mesure dans une zone où le facteur d'échelle est élevé et la variation de signal en fonction de la vitesse sensiblement linéaire. Ces moyens modulateurs reçoivent un signal, souvent qualifié de "dither", ayant une 1/2 période $\tau_n$ égale au temps de parcours de la bobine (c'est-à-dire au temps $\tau_f$ de propagation dans la fibre optique) et une amplitude correspondant à une variation de phase $\phi_m$ non réciproque approximativement de $\Pi/2$. Ce décalage de phase est appliqué en premier à une des ondes, en second à l'autre du fait de la propagation dans la fibre, puisque les moyens modulateurs électro-optiques sont placés en amont de la fibre pour une onde et en aval pour l'autre. Le gyromètre est ainsi polarisé alternativement à peu près au point de demi-intensité de chaque côté du maximum de la frange d'interférence. En d'autres termes, le point de fonctionnement oscille sur la caractéristique P $(\phi)$, entre deux points sensiblement symétriques, à mi-hauteur d'une sinusoïde.

Un second défaut est que, dans sa constitution de base, le gyromètre n'est pas un appareil de zéro. Dans les gyromètres du type ci-dessus défini, ce défaut est écarté en introduisant un déphasage $\phi_r$ non réciproque, c'est-à-dire n'ayant pas le même effet sur les deux ondes contrarotatives, de façon à ramener $\phi_s + \phi_r$ à O. Le dépha-sage $\phi_r$ est généré à l'aide d'une rampe de tension appliquée au modulateur électro-optique en amont de la bobine pour une onde et en aval pour l'autre. La rampe est réglable pour annuler $\phi_s + \phi_r$. La phase d'une onde est ainsi décalée avant qu'elle ne parcoure la bobine tandis que l'autre est décalée après qu'elle a parcouru la bobine, ce qui se traduit par un décalage de phase entre les ondes égal à la différence entre deux rampes identiques décalées temporellement de la durée de parcours de l'anneau. Le déphasage $\phi_r$ est constant dans le temps pour une pente donnée et proportionnel à la pente de la rampe, à laquelle on donne un sens qui dépend du signe de la vitesse d'entrée $\Omega$.

En général, les moyens électroniques de bouclage et de mesure ont une constitution analogique. On a cependant déjà proposé d'utiliser certains composants de nature numérique. La présente invention vise à fournir un gyromètre du type ci-dessus défini dans lequel les moyens électroniques de bouclage et de mesure sont entièrement numériques, exception faite d'un codeur analogique-numérique d'entrée et, éventuellement, d'un convertisseur numérique-analogique de sortie de la boucle ; elle vise également à écarter les conséquences de l'écart inévitable entre $\tau_n$ et $\tau_f$.

Dans ce but, l'invention proposé notamment un gyromètre du type ci-dessus défini, caractérisé en ce que les moyens électroniques de bouclage et de mesure comprennent un convertisseur analogique-numérique recevant le signal de sortie du détecteur d'interférence et attaquant une chaîne ayant un démodulateur numérique recevant un signal de référence à la période 2 $\tau_n$, un intégrateur fournissant une estimation de la vitesse de rotation, un sommateur de correction et un intégrateur de génération de ladite rampe, le sommateur de correction recevant également un signal de correction obtenu par intégration du signal d'erreur du retour de rampe.

Le signal réglant de l'asservissement est appliqué aux moyens électro-optiques, éventuellement après sommation avec le signal de modulation si les moyens électro-optiques comportent un seul déphaseur. Le signal de modulation est lui aussi sous forme numérique. Un convertisseur numérique-analogique de sortie est prévu si les moyens électro-optiques ont une seule paire d'électrodes. Les moyens électro-optiques peuvent également être attaqués directement en numérique, dans la mesure où ils comportent plusieurs paires d'électrodes, ayant chacune un poids différent et recevant chacune un des bits de sortie des moyens de traitement et de mesure.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1 est un schéma de principe d'un gyromètre à fibre optique, dont les parties optiques et électro-optiques sont de constitution générale connue mais mettant en oeuvre l'invention ;
- la figure 2 montre la variation de puissance de sortie en fonction de la phase et des points de fonctionnement possibles ;
- la figure 3 est un diagramme temporel montrant l'allure des signaux à divers emplacements du schéma de la figure 1 ;
- les figures 4 et 5 montrent schématiquement une constitution possible d'un démodulateur et d'un générateur de rampe utilisable dans le dispositif de la figure 1 ;
- la figure 6a montre la façon dont est effectuée la correction, pour les deux sens de rotation ;
- la figure 6b montre l'addition de la modulation à la rampe, pour les deux sens de rotation ;
- la figure 7, similaire à une fraction de la figure 1, montre une variante de réalisation.

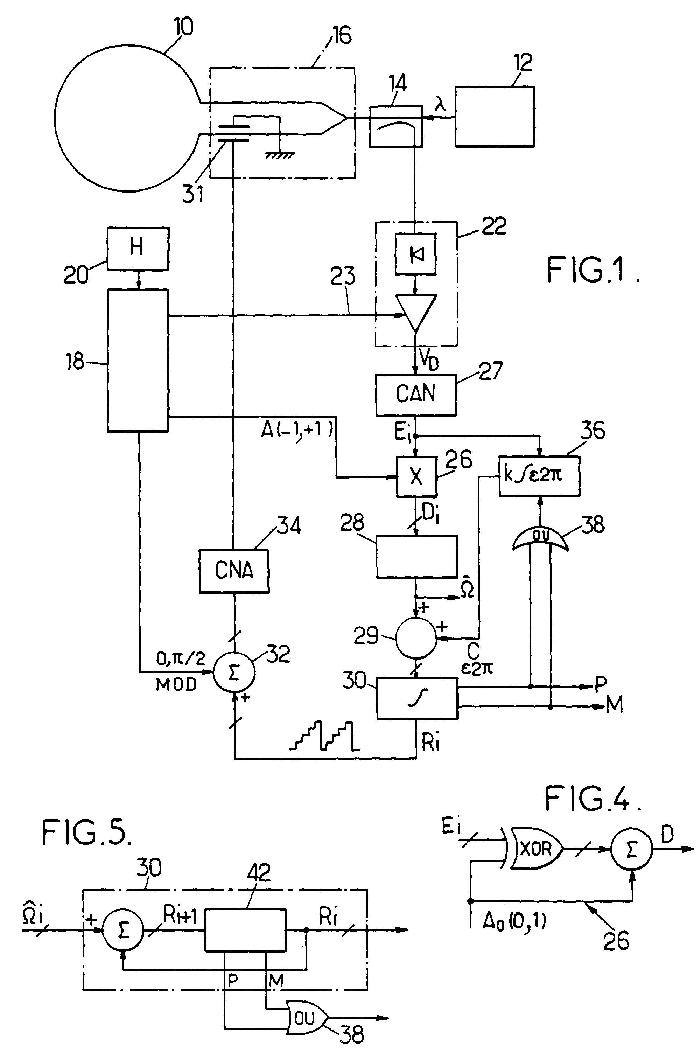

Le gyromètre montré en figure 1 a une constitution générale optique qui est connue ( voir FR-A-2 670 885 ) et en conséquence ne sera que sommairement décrite. Il comprend un guide diélectrique en bobine 10, constitué généralement par une bobine de fibre optique, pouvant avoir de 50 à 1 000 mètres de longueur avec un rayon de l'ordre de quelques centimètres. Une source 12 de lumière, telle qu'une diode laser ou une diode superluminescente, alimente les deux extrémités de la fibre par l'intermédiaire d'un ensemble optique 16. Un dérivateur 14 placé entre la source 12 et l'ensemble optique permet de récupérer la puissance fournie par des ondes qui ont parcouru en sens inverses la bobine 10.

L'ensemble optique 16 comprend un séparateur envoyant une puissance vers les deux extrémités de la fibre. Il comporte également des moyens modulateurs de phase, électro-optiques ou autres, 31.

Dans le cas illustré sur la figure 1, ces moyens comportent un déphaseur unique destiné à recevoir la somme de deux signaux :

- un signal électrique pérodique alternatif, à 1/2 période $\tau_n$ égale au temps $\tau_f$ du parcours de la bobine (temps dont les variations avec la vitesse de rotation $\Omega$ sont négligeables), dont l'amplitude est telle qu'elle provoque une modulation de phase optique de $\pm \Pi/2$ ; ce signal amène les points de mesure dans des zones où la sensibilité et la linéarité sont maximales ; ce signal périodique peut notamment être carré et être synchronisé par un signal MOD provenant d'une base de temps 18 qui reçoit un signal à fréquence fixe d'une horloge 20 ;
- une rampe de pente variable élaborée par les moyens électroniques de bouclage et de mesure.

Les moyens électroniques de bouclage et de mesure comprennent, dans le mode de réalisation illustré sur la figure 1, un module 22 de détection, de filtrage et de pré-amplification, pouvant être constitué par un capteur et un pré-amplificateur muni d'une entrée 23 de remise à zéro. La tension $V_D$ de sortie du module détecteur 22, représentative de la puissance optique P reçue, est appliquée à un convertisseur analogique-numérique 27 fournissant sur sa sortie des échantillons successifs $E_i$ (un par demi-période $\tau_n$), numérisés par exemple sous forme de mots de 8 bits. Chaque signal $E_i$ d'ordre i est appliqué à un démodulateur numérique 26 qui reçoit un signal de référence A de la base de temps 18. Le signal continu démodulé $D_i$, sortant du démodulateur 26 constitue un signal d'écart. Il est appliqué à un intégrateur numérique 28 dont le signal de sortie est représentatif de la vitesse de rotation estimée $\Omega$. Ce signal de sortie attaque, après passage dans un sommateur 29 de correction dont le rôle apparaîtra plus loin, un intégrateur numérique appartenant à un générateur de rampe de phase 30. Ce générateur 30 est également prévu pour fournir, sur une sortie P ou une sortie M, suivant le sens de la rampe, une impulsion à chaque dépassement de capacité de celui-ci, c'est-à-dire des que la rampe atteint une amplitude correspondant à un déphasage optique déterminé, de $2\Pi$ en général. Chaque impulsion correspond en conséquence à un incrément angulaire déterminé de rotation du gyromètre.

Comme on l'a indiqué plus haut, les moyens électro-optiques 31 sont constitués par un déphaseur unique qui doit donc recevoir la somme de la rampe de déphasage et du signal de modulation. Pour cela l'intégrateur 30 est suivi d'un sommateur numérique 32 qui reçoit également le signal de modulation MOD fourni sous forme numérique par la base de temps 18 ou déduite de la correction du $2\Pi$. Ainsi il suffit d'un seul convertisseur numérique-analogique 34 pour attaquer les moyens électro-optiques.

La boucle de correction du $2\Pi$ comporte, dans le cas illustré en figure 1, un intégrateur qui reçoit le signal sous forme d'échantillons numériques $E_i$ et fournit, en sortie, un signal de correction $k \Sigma \varepsilon 2\Pi$, représentatif de l'erreur $\varepsilon 2\Pi$ lors du retour de la rampe, comme on le verra plus loin (k étant une constante). Cet intégrateur est commandé par une porte OU 38 à chaque émission d'un signal sur la sortie P ou la sortie M du générateur 30.

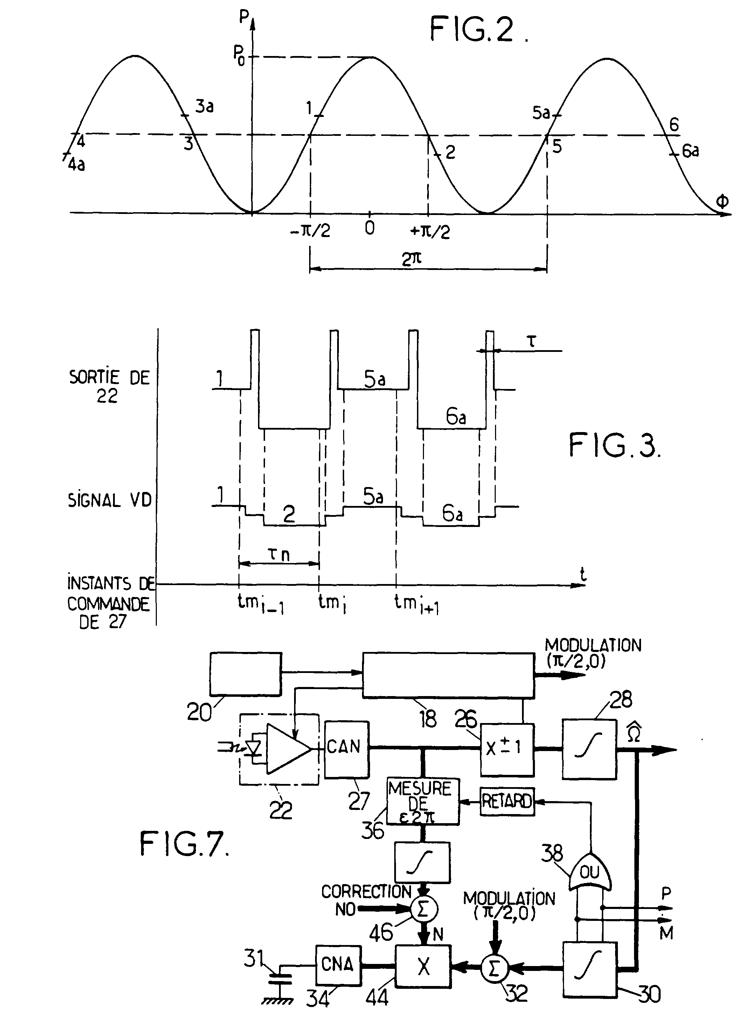

Le dispositif montré en figure 1 permet de faire disparaître les conséquences néfastes de l'écart inévitable entre la période de modulation $\tau_n$ et le temps $\tau_f$ de propagation dans la fibre. Le point de fonctionnement oscille sur la caractéristique $P=f(\phi)$ entre deux points 1 et 2. Lorsque la phase réglante $\phi_r$ compense exactement la phase due à l'effet Sagnac $\phi_s$, les points de fonctionnement sont symétriques. Dans le cas contraire, ces points cessent d'être symétriques, comme le montre la figure 2.

La tension $V_D$ oscille alors entre deux valeurs $V_1$ et $V_2$ ; $(V_2 - V_1)$ A est représentative de $\phi_r + \phi_s$, A étant une variable binaire pouvant prendre les valeurs -1 et +1.

En fait, le détecteur d'interférence est soumis à des pointes de puissance dues au fait que $\tau_n$ n'est pas exactement égal à $\tau_f$. La largeur de ces pointes est égale à $|\tau_f - \tau_n|$, qui est toujours faible comparé à $\tau_f$.

Le convertisseur analogique-numérique 27 est commandé par la base de temps 18 de façon à échantillonner et numériser le signal détecté à des instants successifs $tm_i$, espacés de $\tau_n$, et précédant les pointes de puissance.

Les instants successifs $t_{mi}$ de numérisation sont choisis à la fin de chaque demi-période de modulation afin de minimiser les transitoires de l'amplificateur du module de détection. $E_i$ désignant la valeur numérique de sortie à l'instant $tm_i$, le démodulateur synchrone 26 fournit, sur sa sortie, des valeurs :

$$D_i = E_i \qquad \text{pour A} = +1 \qquad (A_0 = 0)$$

$$D_i = -E_i \qquad \text{pour A} = -1 \qquad (A_0 = 1)$$

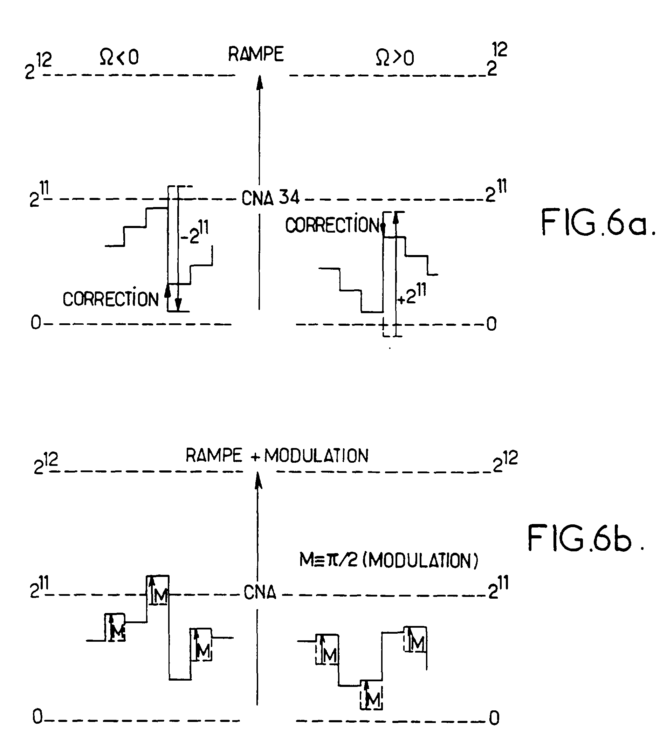

$A_0$ peut par exemple prendre les valeurs 1 et 0 lorsque la modulation de phase est respectivement $+\Pi/2$ ou $-\Pi/2$. Le démodulateur 26 peut alors être réalisé de façon extrêmement simple par des portes OU exclusif et des sommateurs, comme indiqué sur la figure 4.

L'intégrateur numérique 28 effectue alors, à l'issue de chaque période $\tau_n$, l'opération :

$$\hat{\Omega}_i = \hat{\Omega}_{i-1} + D_i$$

et stocke le résultat $\hat{\Omega}_i$ dans un registre tampon, à chaque transfert.

Il est nécessaire d'éviter un débordement dans le registre tampon de l'intégrateur 28. Pour cela, on peut par exemple imposer la contrainte que le transfert dans le registre soit effectué à condition que la somme de deux nombres de même signe ($\hat{\Omega}_{i-1}$ et $D_i$) donne un résultat de signe identique. La capacité en nombres de bits de l'intégrateur 28 est choisie en fonction de la réponse dynamique souhaitée.

Le générateur de rampe 30 doit fournir, à l'issue de chaque période $\tau_n$, une valeur R définie par :

$$R_i = R_{i-1} + \hat{\Omega}_i.$$

Cette fonction peut être réalisée avec un générateur 30 du genre montré en figure 5, comportant un sommateur suivi d'un registre tampon 42. Les signaux de sortie P et M sont constitués par les signaux de dépassement positif et négatif du registre 42. Ces signaux P et M, représentant chacun un incrément angulaire, constituent également les débordements de capacité de la rampe de phase.

Dans le cas illustré sur la figure 1, la rampe de phase est ajoutée au signal de modulation, puis convertie en tension en 34. La phase réglante $\phi_r$ est alors de la forme :

$$\phi_r = K [R(t) - R(t-\tau_f)],$$

les valeurs R étant proportionnelles aux valeurs correspondantes $R_i$ et $R_{i-1}$. La hauteur numérique des marches de sortie est représentative de $\Omega$.

Le débordement du registre tampon 42 peut encore être détecté, dans le sens positif par le fait que la somme de deux nombres positifs donne un résultat négatif, et réciproquement.

Lors de chaque débordement, la correction à effectuer est ajoutée au contenu du registre tampon 42 ou retranchée, suivant le signe de la vitesse de rotation, comme indiqué sur la figure 6a. Dans le cas montré sur la figure 6a, la partie utilisée du générateur de rampe est de 11 bits et l'adjonction de la modulation nécessite 1 bit supplémentaire comme indiqué sur la figure 6b.

La correction C est élaborée par la boucle d'asservissement comportant l'intégrateur 36 de façon à déplacer le point de fonctionnement vers :

- 3 ou 4 (figure 2) à chaque débordement positif de l'intégrateur 30, le point 3 ou le point 4 étant atteint selon que la phase de modulation est $+\Pi/2$ ou $-\Pi/2$ ;
- 5 ou 6 à chaque débordement négatif de l'intégrateur 30, le point 5 ou 6 étant atteint suivant que la phase de modulation est $-\Pi/2$ ou $+\Pi/2$.

Si n est le nombre de bits du registre tampon 42, une phase $2\Pi$ est alors représentée par $2^n$-C ; C étant la représentation en binaire naturel de $\varepsilon 2\Pi$, C est toujours positive.

La superposition de la modulation à la rampe est effectuée, sans gêner la détection de l'erreur sur $2\Pi$ à chaque débordement, par addition des bits les plus significatifs de la rampe et addition à la modulation $(0,\Pi/2)$ dans le sommateur 32. Si la valeur effective $2\Pi e$ correspondant au retour de la rampe n'est pas strictement égale à $2\Pi$, l'erreur $\varepsilon 2\Pi = 2\Pi e - 2\Pi$ est détectée alors que le point de fonctionnement est en 3 ou 4 (ou en 5 ou 6). Dans le cas d'une erreur $\varepsilon 2\Pi$ qui est positive, les points deviennent, sur la figure 2, ceux indiqués en 3a, 4a, 5a et 6a.

Le point 3a correspond par exemple à $\Omega$ négatif et A=1 alors que le point 5a correspond à $\Omega$ positif et A=-1.

Le calcul montre que, si on désigne par $E_{i+1}$ la tension détectée pour l'un des points 3a, ...6a on a, pour des couples de points homologues :

$$E_{i+1} - E_{i-1} = K.\text{signe}\,(\Omega).\text{signe}(A).\varepsilon 2\Pi$$

et, du fait que $E_i = -E_{i-1}$ :

$$E_{i+1} + E_i = K.\text{signe}\,(\Omega).\text{signe}(A).\varepsilon 2\Pi$$

K étant une constante.

On peut rendre la mesure $E_{i+1} + E_i$ indépendante des signes de $\Omega$ et A, en effectuant l'opération :

$$\text{signe}\,(\Omega).\text{signe}(A).(E_{i+1} + E_i) = K\varepsilon 2\Pi.$$

Cette grandeur d'écart est injectée, à chaque remise à zéro, dans l'intégrateur 36.

Une fois le régime établi, l'intégrateur 36 se stabilise à une valeur affectée d'un signe. Par inversion du bit le plus significatif, la représentation en complément à 2 est transformée en représentation en binaire naturel : par exemple, dans le cas d'une représentation sur 3 bits, on a les valeurs ci-après (la première colonne correspondant à la numération décimale, la seconde en représentation à complément à 2, la troisième en binaire naturel):

| 3 | 011 | | 111 |
|---|-----|---------------------|-----|
| 2 | 010 | | 110 |
| 1 | 001 | Inversion | 101 |
| 0 | 000 | du MSB | 100 |
| -1 | 111 | $\longrightarrow$ | 011 |
| -2 | 110 | (bit de poids fort) | 010 |
| -3 | 101 | | 001 |
| -4 | 100 | | 000 |

La correction se retrouve ajoutée à la rampe de phase en cas de débordement positif, retranchée dans le cas d'un débordement négatif, comme il est indiqué sur la figure 6a.

La conversion numérique-analogique, permettant d'obtenir une rampe analogique de commande du déphaseur 31, peut s'effectuer de diverses façons. Une première solution consiste à utiliser un CNA 34 fonctionnant sur 12 bits, lorsque la rampe est numérisée sur 11 bits, ce qui permet d'additionner la modulation d'amplitude $\Pi/2$ à la rampe sans risque de débordement. Cette disposition supprime la nécessité d'un CNA à référence analogique variable, qu'impliquerait une correction de $2\Pi$ au niveau de la référence.

Une seconde solution consiste à découper simplement les électrodes du déphaseur électro-optique 31 en n éléments (n étant le nombre de bits de sortie du sommateur 32), les électrodes successives ayant des longueurs en progression géométrique de base 2. Une telle disposition ne pose pas de problème en optique intégrée.

L'erreur $\varepsilon 2\Pi$ est compensée de façon totalement automatique tant que la détection reste dans son domaine linéaire.

Le principe de cette compensation découle d'une analyse du fonctionnement. Si l'on considère un temps t pendant lequel la phase de Sagnac $\phi_s$ est constante et N impulsions de même type (P ou M) sont émises, l'asservissement

réalise :

$$+n\phi_s + \sum_{i=1}^{n} (\phi_r)i + \sum_{k=1}^{N} \epsilon_k \, 2\Pi(\text{signe } \Omega) = 0 \qquad (1)$$

Dans cette formule (1) n désigne le nombre de pas de calcul $n=t/\tau_n$.
On a par ailleurs :

$$\sum_{i=1}^{n} (\phi_r)i = \sum_{k=1}^{N} 2\Pi(1+\epsilon_k) \qquad (2)$$

Dans le cas par exemple où $(\phi_r)_i$ est positif et où $\phi_s$ est négatif, ce qui correspond à une valeur négative de $\Omega$, on trouve, à partir de la formule (1) :

$$N = - \frac{LD}{\lambda_0 C_0 \tau_n} \theta \quad \theta : \text{angle de rotation du gyromètre} \qquad (3)$$

Cette formule (3) peut également s'interpréter en disant que le poids angulaire $\Delta\theta$ de chaque incrément représenté par un signal P ou M est égal à :

$$\lambda_0 C_0 \tau_n / LD.$$

L'erreur $\varepsilon 2\Pi$ n'intervient plus.

La disposition qui a été décrite jusqu'ici présente la particularité que $2\Pi$ n'est pas représenté par $2^n$ dans le cas où la rampe est codée sur n bits. La mesure est dénormalisée, ce qui empêche une interpolation angulaire. Si l'on souhaite faire une telle interpolation, pour atteindre une résolution angulaire plus faible que celle correspondant au poids des impulsions de débordement, on peut utiliser la disposition schématisée sur la figure 7, où les éléments correspondant à ceux de la figure 1 portent le même numéro de référence. La modulation reste superposée à la rampe, sans risque de débordement.

La rampe de phase est encore générée dans un registre tampon, par exemple modulo $2^{11}$. Dans le cas illustré, la modulation $(0, +\Pi/2)$ ajoutée à la rampe est représentée par $2^9$. Le résultat est multiplié par un nombre N, tel que $2^{11}.N$ soit la représentation numérique de $2\Pi$ au niveau de l'entrée du CNA 34. Cette multiplication est effectuée dans un multiplieur 44. Le nombre N est obtenu, dans un sommateur 46, en ajoutant à $N_0$ la valeur numérique obtenue par intégration de $\varepsilon 2\Pi$. N est la grandeur réglante dans la boucle d'asservissement de 2n.

Le gain du CNA est alors initialement ajusté de telle façon que $(2^{11} + 2^9)N_0$ soit égal à $(1-d)2^{12}$, d étant la variation maximum du gain de conversion de l'ensemble constitué par le CNA 34 et le déphaseur électro-optique 31.

Il y a ainsi un asservissement qui règle la correction de telle façon que $2\Pi$ reste en permanence représenté par $2^{11}$ en sortie du générateur de rampe. Il est alors possible d'améliorer la résolution angulaire en prenant en compte la valeur numérique du générateur de rampe, qui peut être juxtaposée au compteur d'impulsions P et M.

Dans les modes de réalisation décrits, le signal total corrigé destiné aux moyens électro-optiques de déphasage 31 est disponible sous forme numérique (en sortie du sommateur 32 dans le cas de la figure 1 et en sortie du multiplieur 44 dans le cas de la figure 7). Ceci a l'avantage de permettre la réalisation de ces moyens 31 avec plusieurs paires d'électrodes affectées de poids différents, comme expliqué précédemment. En outre, lorsque plusieurs bobines d'orientations différentes sont utilisées pour former un gyromètre à plusieurs axes, un même convertisseur peut être utilisé en multiplexage temporel. Les signaux numériques de modulation peuvent alors être combinés pour attaquer les moyens de déphasage respectifs.

## Revendications

1. Gyromètre comportant : une bobine de fibre optique (10) ; une source électromagnétique (12) munie d'un séparateur pour envoyer dans la bobine deux ondes contrarotatives provenant de la source ; un détecteur d'interférence (22) recevant les ondes contrarotatives ; des moyens électro-optiques de déphasage (31), d'une part commandés pour donner aux ondes une modulation périodique alternative et symétrique de phase, à une 1/2 période $\tau_n$ sensiblement égale au temps $\tau_f$ de parcours de la bobine, d'autre part recevant une rampe de déphasage de pente réglable, placés en amont de la bobine pour une onde et en aval pour l'autre ; et des moyens électroniques de bouclage et de mesure commandant le sens et la valeur de la pente de la rampe pour annuler le déphasage des ondes reçues par le détecteur d'interférence, caractérisé en ce que les moyens électroniques de bouclage et de mesure comprennent un convertisseur analogique-numérique (27) recevant le signal de sortie du détecteur d'interférence (22) et attaquant une chaîne ayant un démodulateur numérique (26) recevant un signal de référence à la période $2\tau_n$, un intégrateur (28) fournissant un signal représentatif d'une estimation $\hat{\Omega}$ de la vitesse de rotation, un sommateur (29) de correction et un intégrateur (30) de génération de ladite rampe, le sommateur de correction recevant également un signal de correction obtenu par intégration du signal d'erreur du $2\Pi$.

2. Gyromètre selon la revendication 1, caractérisé en ce que le signal de sortie de l'intégrateur de génération est ajouté au signal de modulation, les moyens électro-optiques comportant un seul déphaseur.

3. Gyromètre selon la revendication 1, caractérisé par un convertisseur numérique-analogique (34) de sortie en amont des moyens électro-optiques.

4. Gyromètre selon la revendication 2, caractérisé en ce que le signal numérique résultant de l'addition de la sortie de l'intégrateur de génération de rampe et du signal de modulation est appliqué à des moyens électro-optiques ayant plusieurs paires d'électrodes affectées de poids différents.

5. Gyromètre selon les revendications 2 et 3, caractérisé en ce que le convertisseur de sortie a une capacité en nombre de bits suffisamment supérieure à celle de l'intégrateur (30) de génération de rampe de phase réglante pour éviter tout débordement dû à l'addition du signal de modulation numérique.

6. Gyromètre selon la revendication 1, caractérisé en ce que le signal de correction est fourni par une boucle comprenant un intégrateur numérique supplémentaire (36) recevant les échantillons de sortie ($E_i$) du convertisseur analogique-numérique (27) et commandé par un signal (P ou M) reçu de l'intégrateur (30) de génération de rampe de phase à chaque retour de la rampe.

7. Gyromètre selon la revendication 1, caractérisé en ce que le convertisseur analogique-numérique (27) est commandé à des instants $t_m$ à la fin de chaque demi-période de modulation ($\tau_n$) en dehors des intervalles de temps de non-recouvrement du temps de parcours ($\tau_f$) et de la période de modulation.

8. Gyromètre selon la revendication 1, caractérisé en ce que la correction du $2\Pi$ est effectuée par un multiplieur (44).

**Patentansprüche**

1. Gyrometer mit einer optischen Faserspule (10), einer elektromagnetischen Quelle (12), die mit einem Separator versehen ist, um in die Spule zwei gegenläufige Wellen zu schicken, die aus der Quelle stammen, einem Interferenzdetektor (22), der die gegenläufigen Wellen empfängt, mit elektro-optischen Phasenverschiebungsmitteln (31), die einerseits gesteuert werden, um den Wellen eine periodische abwechselnde und phasensymmetrische Modulation mit einer halben Periode $\tau_n$ etwa gleich der Zeit $\tau_f$ des Durchlaufes der Spule zu geben, und die andererseits eine Phasenverschiebungsrampe mit regulierbarer Neigung empfangen und stromaufwärts der Spule für eine Welle und stromabwärts für die andere angeordnet sind, und mit elektronischen Mitteln zum Wenden und Messen, welche die Richtung und den Wert der Neigung der Rampe zum Annulieren der Phasenverschiebung der vom Interferenzdetektor empfangenen Wellen zu steuern,

dadurch gekennzeichnet,
daß die elektronischen Mittel zum Wenden und Messen einen analog-numerischen Wandler (27), der das Ausgangssignal des Interferenzdetektors (22) empfängt und auf eine Kette mit einem numerischen Demodulator (26) zugreift, welcher ein Referenzsignal mit der Periode ($2\,\tau_n$) empfängt, einen Integrator (28), der ein Signal liefert, das repräsentativ für einen Schätzwert $\hat{\Omega}$ der Drehgeschwindigkeit ist, einen Korrektursummierer (29) und einen Integrator (30) zur Erzeugung der Rampe aufweist, wobei der Korrektursummierer gleichermaßen ein Korrektursignal empfängt, welches durch Integration des Fehlersignals um $2\,\Pi$ erhalten wird.

2. Gyrometer nach Anspruch 1,

dadurch gekennzeichnet,

daß das Ausgangssignal des Integrators zur Erzeugung dem Modulationssignal hinzugefügt wird, wobei die elektro-optischen Mittel einen einzigen Phasenverschieber aufweisen.

3.  Gyrometer nach Anspruch 1,

    gekennzeichnet durch
    einen numerisch-analogen Ausgangsumwandler (34) stromaufwärts der elektro-optischen Mittel.

4.  Gyrometer nach Anspruch 2,

    dadurch gekennzeichnet,
    daß das numerische Signal, das aus der Addition des Ausgangs des Integrators zur Erzeugung der Rampe und des Modulationssignales resultiert, auf die elektro-optischen Mittel angewendet wird, welche mehrere Paare von Elektroden mit unterschiedlichen Ladungen aufweisen.

5.  Gyrometer nach Anspruch 2 und 3,

    dadurch gekennzeichnet,
    daß der Ausgangsumwandler eine zahlenmäßige Kapazität von Bits aufweist, die ausreichend größer als die des Integrators (30) zur Erzeugung der Rampe der regelbaren Phase aufweist, um jeden Überlauf aufgrund der Addition des numerischen Modulationssignales zu vermeiden.

6.  Gyrometer nach Anspruch 1,

    dadurch gekennzeichnet,
    daß das Korrektursignal von einer Schleife geliefert wird, welche einen zusätzlichen numerischen Integrator (36) aufweist, der Ausgangswerte ($E_i$) des analog-numerischen Umwandlers (27) empfängt und von einem Signal (P oder M) gesteuert wird, welches vom Integrator (30) zur Erzeugung der Rampe der Phase bei jeder Rückkehr der Rampe empfangen wird.

7.  Gyrometer nach Anspruch 1,

    dadurch gekennzeichnet,
    daß der analog-numerische Umwandler (27) zu den Zeitpunkten ($t_m$) am Ende jeder Halbmodulationsperiode ($\tau_n$) außerhalb der Zeitintervalle des Nichtempfangens während der Durchlaufzeit ($\tau_f$) und der Modulationsperiode gesteuert wird.

8.  Gyrometer nach Anspruch 1,

    dadurch gekennzeichnet,
    daß die Korrektur um $2\,\Pi$ mittels eines Vervielfachers (44) bewirkt wird.

## Claims

1.  Rate gyro including: a fibre optics coil (10); an electromagnetic source (12) equipped with a separator for sending to the coil two counter-rotating waves originating from the source; an interference detector (22) receiving the counter-rotating waves; electro-optical phase-shifting means (31), on the one hand controlled so as to accord the waves an alternating and symmetric periodic phase modulation, with a 1/2 period $\tau_n$ substantially equal to the time $\tau_f$ of traversal of the coil, and on the other hand receiving a phase-shifting ramp of adjustable slope, which means are placed upstream of the coil for one wave and downstream for the other; and electronic means for looping and measurement controlling the sense and value of the slope of the ramp in order to cancel the phase shift of the waves received by the interference detector, characterized in that the electronic means for looping and measurement comprise an analog/digital converter (27) receiving the output signal from the interference detector (22) and driving a chain having a digital demodulator (26) receiving a reference signal with the period $2\tau_n$, an integrator (28) providing a signal representing an estimate $\Omega$ of the speed of rotation, a correction summing unit (29) and an integrator (30) for generating the said ramp, the correction summing unit also receiving a correction signal obtained by integrating the $2\pi$ error signal.

**2.** Rate gyro according to Claim 1, characterized in that the output signal from the generating integrator is appended to the modulating signal, the electro-optical means including a single phase shifter.

**3.** Rate gyro according to Claim 1, characterized by an output digital/analog converter (34) upstream of the electro-optical means.

**4.** Rate gyro according to Claim 2, characterized in that the digital signal resulting from the addition of the output from the ramp generating integrator and of the modulating signal is applied to electro-optical means having several pairs of electrodes assigned different weights.

**5.** Rate gyro according to Claims 2 and 3, characterized in that the output converter has a capacity in number of bits which is sufficiently greater than that of the adjusting phase ramp generating integrator (30) to avoid any overflow due to the addition of the digital modulating signal.

**6.** Rate gyro according to Claim 1, characterized in that the correction signal is provided by a loop comprising a further digital integrator (36) receiving the output samples ($E_i$) from the analog/digital converter (27) and controlled by a signal (P or M) received from the phase ramp generating integrator (30) with each return of the ramp.

**7.** Rate gyro according to Claim 1, characterized in that the analog/digital converter (27) is controlled at instants $t_m$ at the end of each half-period of modulation ($\tau_m$) outside the intervals of time of non-overlapping of the time of traversal ($\tau_f$) and of the modulating period.

**8.** Rate gyro according to Claim 1, characterized in that the $2\pi$ correction is performed by a multiplier (44).

FIG.1.

FIG.4.

FIG.5.

FIG.2.

FIG.3.

FIG.7.

FIG.6a.

FIG.6b.